# EUROPEAN PATENT SPECIFICATION

(11) **EP 0 687 107 B1**
(45) Date of publication and mention of the grant of the patent: **22.08.2001**
(21) Application number: 95303855.1
(22) Date of filing: 06.06.1995
(51) Int. Cl.: H04N 5/44, H04N 9/64, H04N 9/79, H04N 5/775, H04N 5/46

(54) **Television receiver incorporating video recording and reproducing apparatus**
Fernsehempfänger, der eine Videoaufnahme-/Wiedergabe-Einrichtung enthält
Récepteur de télévision incorporant un dispositif d'enregistrement/de reproduction vidéo

(30) Priority: 07.06.1994 JP 12506994
(43) Date of publication of application: 13.12.1995
(73) Proprietor: MATSUSHITA ELECTRIC INDUSTRIAL CO., LTD., Kadoma-shi, Osaka 571-8501 (JP)
(72) Inventor: Miyaguchi, Hisashi, Takatsuki-shi, Osaka 569 (JP)
(74) Representative: Crawford, Andrew Birkby

(56) References cited:
- EP-A- 0 375 365
- EP-A- 0 410 489
- EP-A- 0 437 882
- EP-A- 0 540 034
- EP-A- 0 596 687
- US-A- 3 969 755
- RESEARCH DISCLOSURE, no. 363, 30 July 1994, HAVANT GB, pages 358-359, XP000461308 "Combined multistandard TV and VCR apparatus"
- PATENT ABSTRACTS OF JAPAN vol. 95, no. 004 & JP-A-07 107397 (AIWA CO LTD), 21 April 1995,

## Description

### BACKGROUND OF THE INVENTION

The invention relates to a television receiver incorporating a video recording and reproducing apparatus capable of discriminating and receiving two or more different television standard system such as NTSC, PAL, and SECAM, and recording and reproducing the video signals, and more particularly to a television receiver incorporating a video recording and reproducing apparatus comprising two or more automatic color system discriminating circuits differing in the discriminating capacity for discriminating different television standard systems.

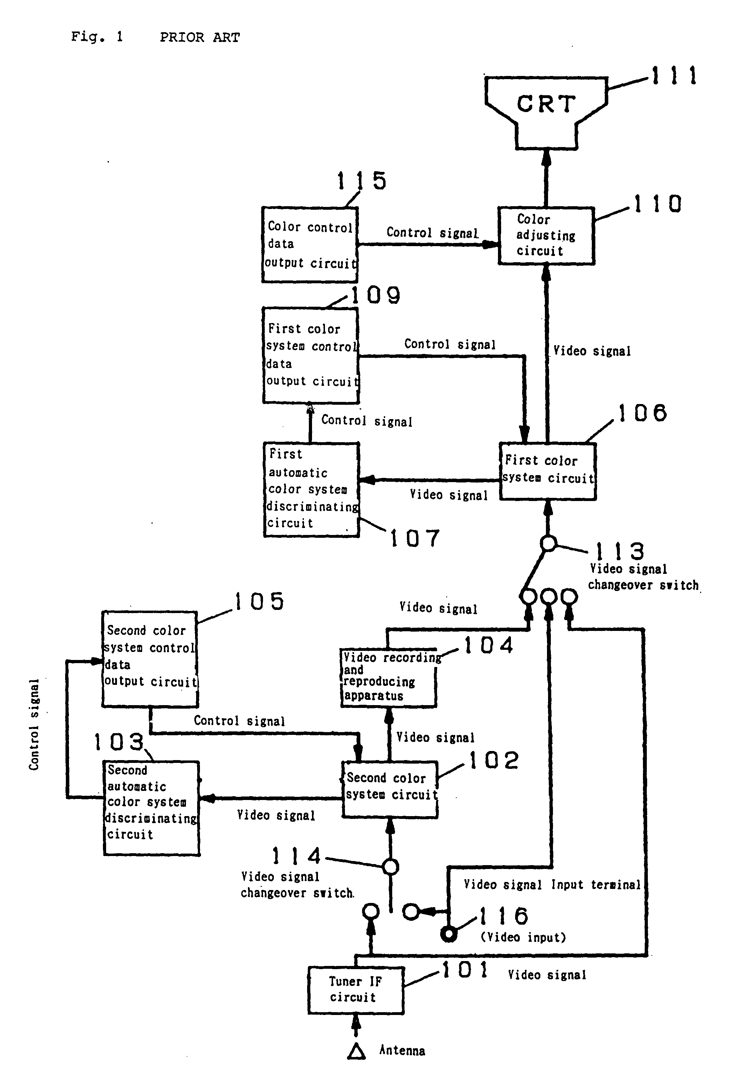

A conventional example of television receiving incorporating a video recording and reproducing apparatus comprising an automatic color system discriminating system is shown in Fig. 1.

In Fig. 1, an output video signal from a tuner IF circuit 101 integrating a tuner for receiving input television signals from an antenna and an IF circuit for converting received signals into intermediate frequency and amplifying, or a video signal from an video signal input terminal 116 is selected by a video signal changeover switch 114 and a video signal changeover switch 113, and is fed into a second color system circuit 102 and a first color system circuit 106.

The video signal fed into the second color system circuit 102 is branched, and added to a second automatic color system discriminating circuit 103, and a second color system control data output circuit 105 is controlled by the information of the color system discriminated by the second automatic color system discriminating circuit 103, the color system corresponding to the standard system of the input video signal is set by the second color system circuit 102 on the basis of the control signal generated in this circuit, and the output of the second color system circuit 102 is recorded in a video recording and reproducing apparatus (for example, video tape recorder) 104.

On the other hand, the video signal fed into the first color system circuit 106 is branched, and added to a first automatic color system discriminating circuit 107, and the information of the color system discriminated by the first automatic color system discriminating circuit 107 is added to a first color system control data output circuit 109 as control signal, the color system corresponding to the standard system of the input video signal is set in the first color system circuit 106 on the basis of the control signal of the first color system control data output circuit 109, its output is fed into an adjusting circuit 110 of a color for adjusting the color on the basis of the control signal of a control data output circuit 115 of color, and it is reproduced on the CRT 111 after color adjustment.

However, the color system of the video signal entered at this time may be discriminated in the first automatic color system discriminating circuit 107 but not discriminated in the second automatic color system discriminating circuit 103 due to difference in the discriminating capacity. If discriminated, nevertheless, the television circuit for issuing to the CRT generally contains a deflection circuit, and the result of discrimination is accurately reflected in the output video signal easily, but setting of color system tends to be improper at the color system circuit 102 side of the video recording and reproducing apparatus, and the video signal produced from the color system circuit 102 is often stored in the video recording and reproducing apparatus 104 as a picture of abnormal colour (for example, colourless).

The video signal reproduced from thus recorded video recording and reproducing apparatus 104 is reproduced in the CRT 111 directly as picture of abnormal colour.

In the conventional constitution, therefore, if the video signal cannot be discriminated in the first automatic colour system discriminating circuit 107, wrong image is reproduced in the CRT 111 so that the user notices at this time, but whether the video signal can be discriminated in the second automatic colour system discriminating circuit 103 or whether the colour is restored normally or not in the second colour system 102 is judged only after reproduced in the CRT 111 by recording and reproducing in the video recording and reproducing apparatus 103, and only then it is known to be abnormal.

### SUMMARY OF THE INVENTION

It is hence a primary object of the invention to solve the conventional problems by notifying the user in advance of abnormality, if any, of the colour when recording the picture.

To achieve the object, a first aspect of the television receiver incorporating a video recording and reproducing apparatus of the invention comprises:
a first automatic colour system discriminating circuit for discriminating a colour system of an input video signal,
a first colour system control data output circuit for applying colour system control data to a first colour system circuit on the basis of judgement of the discrimination of the colour system made by the first automatic colour system discriminating circuit, and setting the colour system,
a second automatic colour system discriminating circuit for discriminating the colour system of the input video signal,
a second colour system control data output circuit for applying colour system control data to a second colour system circuit on the basis of judgement of the discrimination of the colour system made by the second automatic colour system discriminating circuit, and setting the colour system, and
a video recording and reproducing apparatus for recording an output video signal of the second colour system circuit,
said receiver being characterised by further comprising:
   colour system information means for storing colour system information, said information being used for judging approval or disapproval of the discrimination of the colour system made by the second automatic colour system discriminating circuit;
   a colour system comparator for comparing the colour system discrimination by the first automatic colour system discriminating circuit with the colour system information held in the colour system information means, and issuing a control signal when the comparison shows that it is impossible to discriminate the colour system in the second automatic colour system discriminating circuit;
   a colour adjusting circuit for adjusting the colour of output of the first colour system circuit;
   a colour control data output circuit arrange to receive the control signal of the colour system comparator and control the colour adjusting circuit in response thereto; and
   a display device for receiving the output of the colour adjusting circuit and reproducing a picture therefrom.

In a second aspect of the invention, instead of forming the color system information means in the first aspect, the color system comparator compares the color system information judged by the first automatic color system discriminating circuit and the color system information discriminated by the second automatic color system discriminating circuit, and issues a control signal when it is judged impossible to discriminate by the second automatic color system judging circuit.

In both first and second aspects, when the color system comparator generates a control signal by judging it impossible to discriminate by the second automatic color system discriminating circuit, the color adjusting circuit is adjusted in the color control data output circuit, and accordingly the color of the CRT is adjusted, and it functions to show abnormal picture when recording the picture by showing a wrong color from the display device to the user.

Therefore, when the user records the picture in the video recording and reproducing apparatus, it gives a warning so that abnormal color may not be recorded due to impossibility to discriminate the color system in the second automatic color system discriminating circuit, so that the user can set proper processing beforehand.

### BRIEF DESCRIPTION OF THE DRAWINGS

Fig. 1 is a block diagram of a television receiver incorporating video recording and reproducing apparatus in a prior art;
Fig. 2 is a block diagram of a television receiver incorporating video recording and reproducing apparatus in a first embodiment of the invention; and
Fig. 3 is a block diagram of a television receiver incorporating video recording and reproducing apparatus in a second embodiment of the invention.

### EMBODIMENTS OF THE INVENTION

Referring now to the drawings, embodiments of television receiver incorporating video recording and reproducing apparatus of the invention are described below.

### (Embodiment 1)

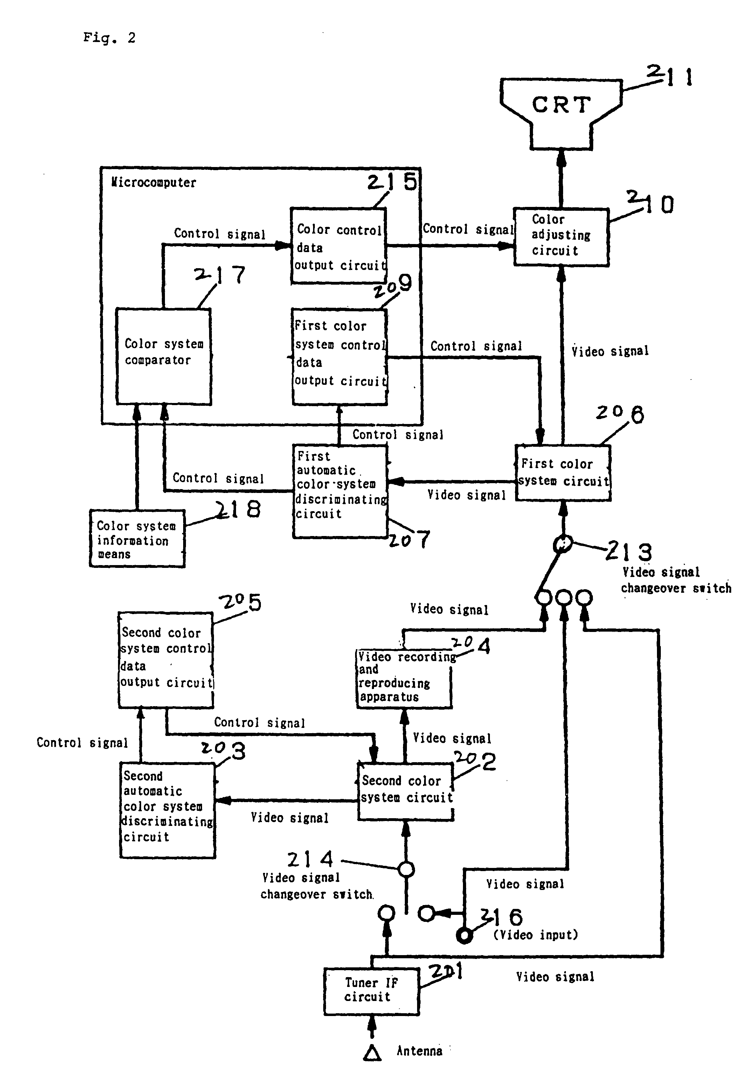

Fig. 2 is a block diagram of a television receiver incorporating video recording and reproducing apparatus in a first embodiment of the invention.

A comparison output of a color system comparator 217 is given to a color control data output circuit 215, and its output is given to a color adjusting circuit 210, where the color of a first color system circuit 206 is adjusted and issued to a CRT 211.

As shown in Fig. 2, a first color system control data output circuit 209, a color system comparator 217, and color control data output circuit 215 may be composed of microcomputers, and other constituent parts may be also processed on the software of microcomputer.

In Fig. 2, the output video signal of the tuner IF circuit 201 for receiving and amplifying the input television signal from the antenna, or a video signal from an video signal input terminal 216 is selected by a video signal changeover switch 214 and a video signal changeover switch 213, and is fed into a second color system circuit 202 and a first color system circuit 206.

The video signal fed into the second color system circuit 202 is branched, and added to a second automatic color system discriminating circuit 203, and a second color system control data output circuit 205 is controlled by the information of the color system discriminated by the second automatic color system discriminating circuit 203, the color system corresponding to the standard system of the input video signal is set by the second color system circuit 202 on the basis of the control signal generated in this circuit, and fed, recorded and reproduced in a video recording and reproducing apparatus (for example, video tape recorder) 204.

On the other hand, the output of the video changeover switch 213 for changing over the video signal from the tuner IF circuit 201, the video signal from the video signal input terminal 216, and the video signal from the video recording and reproducing apparatus 204 is added to the first color system circuit 206, and this input video signal is branched, and added to a first automatic color system discriminating circuit 207.

Using the color system information discriminated herein as the control signal, the first color system control data output circuit 209 is controlled, and the color system is set according to the standard system of the input video signal in the first color system circuit 206 on the basis of the control signal of the first color system control data output circuit 209.

When setting of the color system is automatic, the color system is set by the information of the color system discriminated by the second automatic color system discriminating circuit 203 and first automatic color system discriminating circuit 207.

As the color system information 218, information of the system that cannot be discriminated by the second automatic color system discriminating circuit 203 is accumulated, for example, in a memory.

The information of the color system discriminated in the first automatic color system discriminating circuit 207 is also given to a color system comparator 217.

This information and the color system information held in color system information means 218 are compared in the color system comparator 217, and when the result of comparison is same, it is judged that it cannot be discriminated correctly in the second automatic color system discriminating circuit 203.

As the color system information of the color system information means 218, meanwhile, the data that can be discriminated in the second automatic color system discriminating circuit 203 may be held. In such a case, if not same as the result judged by the color system comparator 217, it is judged that it cannot be discriminated correctly in the second automatic color system discriminating circuit 203.

Consequently, by the control signal of the color system comparator 217, a control signal is generated from a color control data output circuit 215, and it is fed into a color adjusting circuit 210 for adjusting the video signal color entered from the first color system circuit 206, and herein the color adjusting circuit 210 is adjusted so that the color may be in abnormal state, for example, in colorless state.

As a result, a colorless video signal is reproduced in a CRT 211 which is a display device, and the user knows that the video information produced from the second color system circuit 202 and entered into the video recording and reproducing apparatus 204 is to be recorded as a signal of abnormal color (for example, colorless), so that the user can either adjust correctly the color of the signal to be recorded in the video recording and reproducing apparatus 204 by adjusting the second color system circuit 202 or the like, or, if impossible to adjust, stop recording into the video recording and reproducing apparatus 204.

### (Embodiment 2)

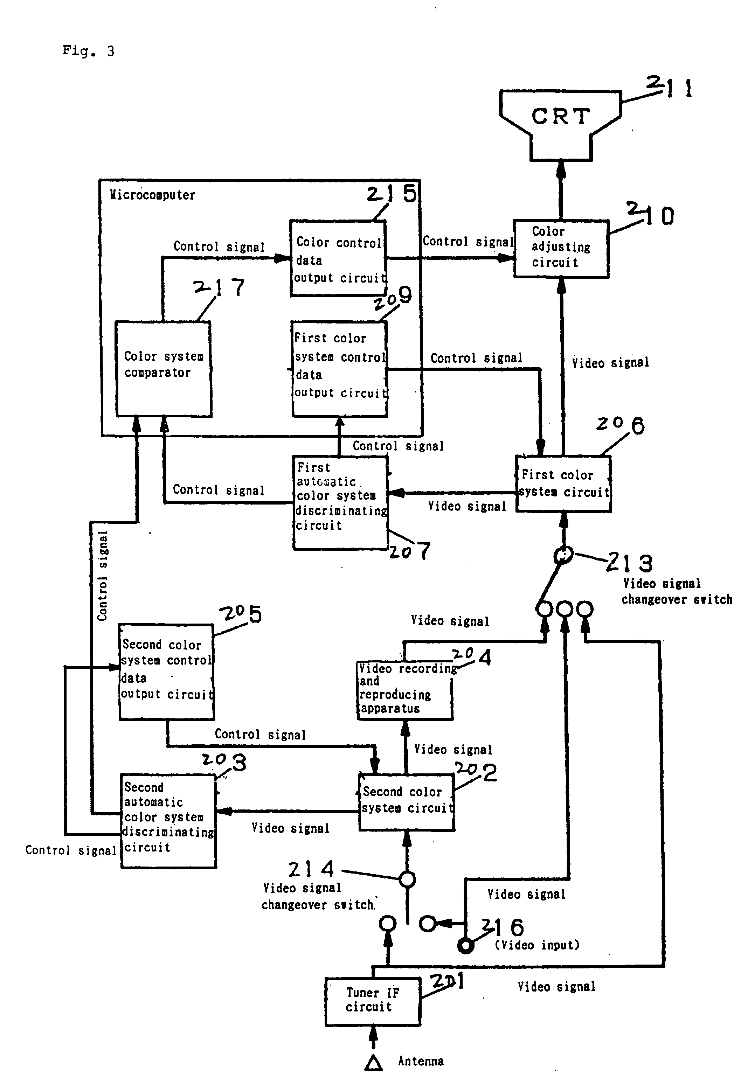

Fig. 3 is a block diagram of a television receiver incorporating a video recording and reproducing apparatus in a second embodiment of the invention.

In Fig. 3, those with the same functions as in the first embodiment in Fig. 2 are identified with same reference numerals, and their explanations are omitted.

What differs from the first embodiment in Fig. 2 is that, instead of the color system information 218 in Fig. 2, the discriminating information of the second automatic color system discriminating circuit 203 for discriminating the color system of the input video signal in the second color system circuit 202 is applied to the color system comparator 217 as control signal.

In the color system comparator 217, the information of color system discriminated in the first automatic color system discriminating circuit 207 and the information of color system discriminated in the second automatic color system discriminating circuit 203 are compared, and when the result of comparison is different, the color system comparator 217 judges that it cannot be discriminated correctly in the second automatic color system discriminating circuit 203, while the other operation is same as in the first embodiment and is not explained herein.

On the basis of the judging result, same as in the first embodiment, the color control data output circuit 215 is operated, and the color adjusting circuit 210 is controlled so that the video signal entered from the first color system circuit 206 may not be colored.

As a result, a colorless video signal is reproduced in the CRT 211. Seeing it, the user knows that the video information produced from the second color system circuit 202 and entered into the video recording and reproducing apparatus 204 is to be recorded as a signal of abnormal color (for example, colorless), so that the user can adjust correctly the color of the signal to be recorded in the video recording and reproducing apparatus 204 by adjusting the second color system circuit 202 or the like, same as in the first embodiment.

Thus, according to the invention, since the discriminating capacity differs between the first automatic color system discriminating circuit for sending the video signal into the CRT, and the second automatic color system discriminating circuit for sending the video signal to the video recording and reproducing apparatus, in order to avoid the problem of abnormal reproduced image in the video recording and reproducing apparatus in spite of normal display in the CRT as the display device, or failure in video recording while not knowing that the automatic color system discriminating circuit for sending the video signal to the video recording and reproducing circuit cannot discriminate the input video signal, the fact of abnormality of the video signal to be recorded can be shown to the user through the CRT before recording the video signal in the video recording and reproducing apparatus.

As the warning means to the user in the invention, instead of colorless display shown in the embodiments, an obviously abnormal color may be tinted.

The display device is not limited to the CRT, but any means capable of reproducing the television may be used.

The circuits and other constitutions are not limited to the illustrated embodiments alone, and various changes and modifications are possible within the scope of the invention.

## Claims

1. A television receiver incorporating a video recording and reproducing apparatus comprising:
a first automatic colour system discriminating circuit (207) for discriminating a colour system of an input video signal,
a first colour system control data output circuit (209) for applying a colour system control data to a first colour system circuit (206) on the basis of judgement of the discrimination of the colour system made by the first automatic colour system discriminating circuit, and setting the colour system,
a second automatic colour system discriminating circuit (203) for discriminating the colour system of the input video signal,
a second colour system control data output circuit (205) for applying a colour system control data to a second colour system circuit on the basis of judgement of the discrimination of the colour system made by the second automatic colour system discriminating circuit, and setting the colour system, and
a video recording and reproducing apparatus (204) for recording an output video signal of the second colour system circuit,
said receiver being characterised by further comprising:
colour system information means (218) for storing colour system information, said information being used for judging approval or disapproval of the discrimination of the colour system made by the second automatic colour system discriminating circuit;
a colour system comparator (217) for comparing the colour system discrimination by the first automatic colour system discriminating circuit with the colour system information held in the colour system information means, and issuing a control signal when the comparison shows that it is impossible to discriminate the colour system in the second automatic colour system discriminating circuit;
a colour adjusting circuit (210) for adjusting the colour of output of the first colour system circuit;
a colour control data output circuit (215) arranged to receive the control signal of the colour system comparator and control the colour adjusting circuit in response thereto; and
a display device (211) for receiving the output of the colour adjusting circuit and reproducing a picture therefrom.

2. A television receiver incorporating a video recording and reproducing apparatus comprising:
a first automatic colour system discriminating circuit (207) for discriminating a colour system of an input video signal,
a first colour system control data output circuit (209) for applying colour system control data to a first colour system circuit (206) on the basis of judgement of the discrimination of the colour system made by the first automatic colour system discriminating circuit, and setting the colour system,
a second automatic colour system discriminating circuit (203) for discriminating the colour system of the input video signal,
a second colour system control data output circuit (205) for applying colour system control data to a second colour system control data to a second colour system circuit on the basis of judgement of the discrimination of the colour system made by the second automatic colour system discriminating circuit, and setting the colour system, and
a video recording and reproducing apparatus (204) for recording an output video signal of the second colour system circuit,
said receiver being characterised by further comprising:
a colour system comparator (217) for comparing the colour system discriminating made by the first automatic colour system discriminating circuit and the colour system discrimination made by the second automatic colour system discriminating circuit, and issuing a control signal when the comparison shows that the respective discrimination are different and hence that it is impossible to discriminate the colour system in the second automatic colour system discriminating circuit;
a colour adjusting circuit (210) for adjusting the colour of output of the first colour system circuit;
a colour control data output circuit (215) arranged to receive the control signal of the colour system comparator and control the colour adjusting circuit in response thereto; and
a display device (211) for receiving the output of the colour adjusting circuit and reproducing a picture therefrom.

3. A television receiver incorporating a video recording and reproducing apparatus of claim 1, wherein the colour system information means stores the colour system information that cannot be discriminated by the second automatic colour system discriminating circuit.

4. A television receiver incorporating a video recording and reproducing apparatus of claim 1, wherein the colour system information means stores the colour system information that can be discriminated by the second automatic colour system discriminating circuit.

5. A television receiver incorporating a video recording and reproducing apparatus of claim 1 or 2, wherein the colour system comparator sends a control signal to the colour control data output circuit so that the video signal from the colour adjusting circuit may not be coloured when the second automatic colour system discriminating circuit cannot discriminate the colour system.

## Patentansprüche

1. Fernsehempfänger, der eine Video-Aufzeichnungs-und-Wiedergabe-Vorrichtung einschließt, und der umfasst:
eine erste automatische Farbsystem-Erkennungsschaltung (207), die ein Farbsystem eines Eingangsvideosignal erkennt,
eine erste Farbsystemsteuerdaten-Ausgangsschaltung (209), die Farbsystemsteuerdaten an eine erste Farbsystemschaltung (206) auf der Grundlage der Feststellung beim Erkennen des Farbsystems durch die erste automatische Farbsystem-Erkennungsschaltung anlegt und das Farbsystem einstellt,
eine zweite automatische Farbsystem-Erkennungsschaltung (203), die das Farbsystem des Eingangsvideosignals erkennt,
eine zweite Farbsystemsteuerdaten-Ausgangsschaltung (205), die Farbsystemsteuerdaten an eine zweite Farbsystemschaltung auf der Grundlage der Feststellung beim Erkennen des Farbsystems durch die zweite automatische Farbsystem-Erkennungsschaltung anlegt und das Farbsystem einstellt, und
eine Video-Aufzeichnungs-und-Wiedergabe-Vorrichtung (204), die ein Ausgangsvideosignal der zweiten Farbsystemschaltung aufzeichnet,
wobei der Empfänger **dadurch gekennzeichnet** ist, dass er des Weiteren umfasst:
eine Farbsystem-Informationseinrichtung (218), die Farbsysteminformationen speichert, wobei die Informationen genutzt werden, um Zustimmung oder Ablehnung der Erkennung des Farbsystems durch die zweite automatische Farbsystem-Erkennungsschaltung festzustellen;
eine Farbsystem-Vergleichseinrichtung (217), die die Farbsystemerkennung durch die erste automatische Farbsystem-Erkennungsschaltung mit den Farbsysteminformationen vergleicht, die in der Farbsystem-Informationseinrichtung gespeichert sind, und ein Steuersignal ausgibt, wenn der Vergleich zeigt, dass es unmöglich ist, das Farbsystem in der zweiten automatischen Farbsystem-Erkennungsschaltung zu erkennen;
eine Farbregulierschaltung (210), die die Farbe des Ausgangs der ersten Farbsystemschaltung reguliert;
eine zweite Farbsteuerdaten-Ausgangsschaltung (215), die das Steuersignal der Farbsystem-Vergleichseinrichtung empfängt und die Farbregulierschaltung in Reaktion darauf steuert; und
eine Anzeigevorrichtung (211), die den Ausgang der Farbregulierschaltung empfängt und ein Bild daraus wiedergibt.

2. Fernsehempfänger, der eine Video-Aufzeichnungs-und-Wiedergabe-Vorrichtung einschließt und der umfasst:
eine erste automatische Farbsystem-Erkennungsschaltung (207), die ein Farbsystem eines Eingangsvideosignals erkennt,
eine erste Farbsystemsteuerdaten-Ausgangsschaltung (209), die Farbsystemsteuerdaten an eine erste Farbsystemschaltung (206) auf der Grundlage der Feststellung beim Erkennen des Farbsystems durch die erste automatische Farbsystem-Erkennungsschaltung anlegt und das Farbsystem einstellt,
eine zweite automatische Farbsystem-Erkennungsschaltung (203), die das Farbsystem des Eingangsvideosignals erkennt,
eine zweite Farbsystemsteuerdaten-Ausgangsschaltung (205), die Farbsystemsteuerdaten an eine zweite Farbsystemschaltung auf der Grundlage des Feststellens beim Erkennen des Farbsystems durch die zweite automatische Farbsystem-Erkennungsschaltung anlegt und das Farbsystem einstellt, und
eine Video-Aufzeichnungs-und-Wiedergabe-Vorrichtung (204), die ein Ausgangsvideosignal der zweiten Farbsystemschaltung aufzeichnet,
wobei der Empfänger **dadurch gekennzeichnet** ist, dass er des Weiteren umfasst:
eine Farbsystem-Vergleichseinrichtung (217), die die Farbsystemerkennung durch die erste automatische Farbsystem-Erkennungsschaltung und die Farbsystemerkennung durch die zweite automatische Farbsystem-Erkennungsschaltung vergleicht und ein Steuersignal ausgibt, wenn der Vergleich zeigt, dass die entsprechenden Erkennungen sich voneinander unterscheiden und es daher unmöglich ist, das Farbsystem in der zweiten automatischen Farbsystem-Erkennungsschaltung zu erkennen;
eine Farbregulierschaltung (210), die die Farbe des Ausgangs der ersten Farbsystemschaltung reguliert;
eine Farbsteuerdaten-Ausgangsschaltung (215), die das Steuersignal der Farbsystem-Vergleichseinrichtung empfängt und die Farbregulierschaltung in Reaktion darauf steuert; und
eine Anzeigevorrichtung (211), die den Ausgang der Farbregulierschaltung empfängt und ein Bild daraus wiedergibt.

3. Fernsehempfänger, der eine Video-Aufzeichnungs-und-Wiedergabe-Vorrichtung einschließt, nach Anspruch 1, wobei die Farbsystem-Informationseinrichtung die Farbsysteminformationen speichert, die von der zweiten automatischen Farbsystem-Erkennungsschaltung nicht erkannt werden können.

4. Fernsehempfänger, der eine Video-Aufzeichnungs-und-Wiedergabe-Vorrichtung einschließt, nach Anspruch 1, wobei die Farbsystem-Informationseinrichtung die Farbsysteminformationen speichert, die von der zweiten automatischen Farbsystem-Erkennungsschaltung erkannt werden können.

5. Fernsehempfänger, der eine Video-Aufzeichnungs-und-Wiedergabe-Vorrichtung einschließt, nach Anspruch 1 oder 2, wobei die Farbsystem-Vergleichseinrichtung ein Steuersignal zu der Farbsteuerdaten-Ausgangsschaltung sendet, so dass das Videosignal von der Farbregulierschaltung möglicherweise nicht farbig ist, wenn die zweite automatische Farbsystem-Erkennungsschaltung das Farbsystem nicht erkennen kann.

## Revendications

1. Récepteur de télévision, incorporant un dispositif d'enregistrement et de reproduction vidéo, comprenant :
un premier circuit (207) de discrimination automatique de système de couleurs pour discriminer un système de couleurs d'un signal vidéo d'entrée,
un premier circuit (209) de délivrance de données de commande d'un système de couleur pour appliquer des données de commande d'un système de couleurs à un premier circuit (206) du système de couleurs sur la base de l'évaluation de la discrimination du système de couleurs établie par le premier circuit de discrimination automatique du système de couleurs, et régler le système de couleurs;
un second circuit (203) de discrimination automatique du système de couleurs pour discriminer le système de couleurs du signal vidéo d'entrée,
un second circuit (205) de sortie de données de commande du système de couleurs pour appliquer les données de commande du système de couleurs à un second circuit de système de couleurs sur la base de l'évaluation de la discrimination du système de couleurs effectuée par le second circuit de discrimination automatique du système de couleurs, et pour régler le système de couleurs, et
un dispositif d'enregistrement et de reproduction vidéo (204) pour enregistrer un signal vidéo de sortie du second circuit du système de couleurs,
ledit récepteur étant caractérisé en ce qu'il comporte en outre :
des moyens (218) d'informations sur le système de couleurs pour mémoriser une information sur le système de couleurs, ladite information étant utilisée pour évaluer l'approbation ou la désapprobation de la discrimination du système de couleurs établie par le second circuit de discrimination automatique du système de couleurs;
un comparateur (217) de systèmes de couleurs pour comparer la discrimination du système de couleurs fournie par le premier circuit de discrimination automatique du système de couleurs à l'information du système de couleurs contenue dans les moyens d'informations du système de couleurs, et délivrer un signal de commande lorsqu'il est impossible de discriminer le système de couleurs dans le second circuit de discrimination automatique du système de couleurs;
un circuit d'ajustement de couleur (210) pour ajuster la couleur du signal de sortie du premier circuit du système de couleurs;
un circuit (215) de délivrance de données de commande de couleurs agencé pour recevoir le signal de commande du comparateur du système de couleurs et commander le circuit d'ajustement de couleur en réponse à cela; et
un dispositif d'affichage (211) pour recevoir le signal de sortie du circuit d'ajustement de couleur et reproduire une image à partir de ce signal.

2. Récepteur de télévision incorporant un dispositif d'enregistrement et de reproduction vidéo, comprenant :
un premier circuit (207) de discrimination automatique de système de couleurs pour discriminer un système de couleurs d'un signal vidéo d'entrée,
un premier circuit (209) de délivrance de données de commande d'un système de couleurs pour appliquer des données de commande d'un système de couleurs à un premier circuit (206) du système de couleurs sur la base de l'évaluation de la discrimination du système de couleurs établie par le premier circuit de discrimination automatique du système de couleurs, et régler le système de couleurs;
un second circuit (203) de discrimination automatique du système de couleurs pour discriminer le système de couleurs du signal vidéo d'entrée,
un second circuit (205) de sortie de données de commande du système de couleurs pour appliquer les données de commande du système de couleurs à un second circuit du système de couleurs sur la base de l'évaluation de la discrimination du système de couleurs effectuée par le second circuit de discrimination automatique du système de couleurs, et pour régler le système de couleurs, et
un dispositif d'enregistrement et de reproduction vidéo (204) pour enregistrer un signal vidéo de sortie du second circuit du système de couleurs,
ledit récepteur étant caractérisé en ce qu'il comporte en outre :
un comparateur (217) de systèmes de couleurs pour comparer la discrimination du système de couleurs faite par le premier circuit de discrimination automatique du système de couleurs et la discrimination du système de couleurs faite par le second circuit de discrimination automatique du système de couleurs, et pour délivrer un signal de commande lorsque la comparaison montre que les discriminations respectives sont différentes et que par conséquent il est impossible d'établir une discrimination du second circuit de discrimination automatique du système de couleurs;
un circuit d'ajustement de couleur (210) pour ajuster la couleur du signal de sortie du premier circuit du système de couleurs;
un circuit (215) de délivrance de données de commande de couleurs agencé pour recevoir le signal de commande du comparateur du système de couleur et commander le circuit d'ajustement de couleur en réponse à cela; et
un dispositif d'affichage (211) pour recevoir le signal de sortie du circuit d'ajustement de couleur et reproduire une image à partir de ce signal.

3. Récepteur de télévision incorporant un dispositif d'enregistrement et de reproduction vidéo selon la revendication 1, dans lequel les moyens d'informations du système de couleurs mémorisent l'information du système de couleurs qui ne peut pas être discriminée par le second circuit de discrimination automatique du système de couleurs.

4. Récepteur de télévision incorporant un dispositif d'enregistrement et de reproduction vidéo selon la revendication 1, dans lequel les moyens d'informations du système de couleurs mémorisent l'information du système de couleurs, qui peut être discriminée par le second système de discrimination automatique du système de couleurs.

5. Récepteur de télévision incorporant un dispositif d'enregistrement et de reproduction vidéo selon la revendication 1 ou 2, dans lequel le comparateur du système de couleurs envoie un signal de commande au circuit de sortie de données de commande de couleur de sorte que le signal vidéo délivré par le circuit d'ajustement de couleur ne peut pas être coloré lorsque le second circuit de discrimination automatique du système de couleurs ne peut pas discriminer le système de couleurs.
